**Europäisches Patentamt**

**European Patent Office**

**Office européen des brevets**

(11) Publication number: **0 101 627**
**B1**

(12) **EUROPEAN PATENT SPECIFICATION**

(45) Date of publication of patent specification: **10.10.90**

(21) Application number: **83201088.8**

(22) Date of filing: **22.07.83**

(51) Int. Cl.⁵: **B 29 C 67/24,** B 29 C 39/00, C 08 F 4/60

(54) A process for producing an olefin polymer article.

(30) Priority: **19.08.82 US 409744**

(43) Date of publication of application:
**29.02.84 Bulletin 84/09**

(45) Publication of the grant of the patent:
**10.10.90 Bulletin 90/41**

(84) Designated Contracting States:
**AT BE CH DE FR GB IT LI NL**

(56) References cited:
**DE-A-1 127 579**
**GB-A-2 049 542**
**GB-A-2 054 616**
**US-A-2 912 418**
**US-A-3 794 451**
**US-A-4 130 618**
**US-A-4 191 717**
**US-A-4 311 816**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Brownscombe, Thomas Fairchild**
**2737 Amherst**
**Houston Texas 77005 (US)**
Inventor: **Willis, Carl Lesley**
**15922 Red Willow Drive**
**Houston Texas 77084 (US)**

(74) Representative: **Aalbers, Onno et al**
**P.O. Box 302**
**NL-2501 CH The Hague (NL)**

Courier Press, Leamington Spa, England.

## Description

This invention is concerned with a process for the polymerization of ethylene, propylene or 1-butene in the presence of a procatalyst comprising a magnesium halide, a titanium halide and an electron donor and a cocatalyst comprising a trialkylaluminium compound and, optionally a selectivity control agent. Such process is known in the art, e.g. from GB—A—1,387,890 and GB—A—1,559,194.

In another aspect the invention is concerned with RIM technology, RIM standing for Reactive Injection Moulding. In this technique, which for certain polymerization reactions, e.g. production of polyurethanes, has been known for some thirty years, the polymerization is effected in a mould having a predetermined shape. The polymer takes the form of the internal volume of the mould, and the result is a finished article. It therefore is a method for directly producing a finished polymer article doing away with the need for previous preparation of polymer by polymerization of monomer. Such process is described in e.g. GB—A—2,049,542 and US—A—3,794,451.

Presently, no RIM technology is known for producing finished articles of polyethylene, polypropylene or poly-1-butene, all commercial polyolefin plants produce either polymer powder or polymer granulate and all finished polyolefin articles are made by processing technologies such as blow-extrusion, slit-extrusion, blow-moulding, compression-moulding, injection-moulding, pipe- or profile-extrusion or fibre-spinning.

The applicants are not aware of the exact reason why the present situation is as it is presently. One of the problems could well be associated with the difficulty related to the finding of a suitable method for supplying procatalyst, cocatalyst and monomer into the mould in the absence of the usual catalyst component transporting media which are normally liquid alkanes such as hexane, heptane, iso-octane or diesel fuel.

The present invention now defines a novel RIM method for producing finished articles from polyethylene, polypropylene or poly-1-butene, employing Ziegler-Natta type catalyst. Thereto the invention is concerned with a process for the polymerization of ethylene, propylene or 1-butene in the presence of procatalyst comprising a magnesium halide, a titanium halide and an electron donor and a cocatalyst comprising trialkylaluminium and optionally a selectivity control agent, characterized in that
   a) the polymerization is effected in a mould,
   b) to accumulate for polymer shrinkage monomer is additionally supplied to the mould,
   c) the catalyst is introduced into the mould either by
   (i) mixing procatalyst with fluid monomer, mixing cocatalyst with fluid monomer, combining said monomer streams at a position adjacent to the mould and introducing catalyst containing monomer as a single feed stream into the mould, or by
   (ii) supplying each of the various catalyst components to a single fluid monomer feed stream and maintaining the temperature of that single feed stream at a temperature of at most 10°C from the moment of having contacted cocatalyst with procatalyst, up to the moment of introducing the feed stream into the mould.

The process of this invention permits the production of large parts, if desired of filled polymer, which faithfully reproduce details of the mould. Production of large parts in a closed mould is made economical because pressures of at most a few hundred pounds per square inch are required; this compares with 15,000—20,000 psi injection pressure in conventional injection moulding. In addition to the low injection pressure which is set by the vapour pressure of the monomer at the moulding conditions, the fact that monomer and not polymer is injected means that superb mould resolution and superb definition of the mould transferred to the part is possible. In addition, the moulding difficulties associated with weld lines and with difficult flow around right angle corners or through restricted sections are eliminated, allowing production of novel types of injection moulded parts. Fillers, colouring agents and other materials can be present in the mould or entrained in the feed entering the mould, resulting in a filled or coloured part without a separated compounding step; or a continuous reinforcement can be placed in the mould before the injection of the monomer.

In addition to the opportunity to form large and uniquely-filled parts, the materials produced by this technique are potentially much different from current injection moulded materials in several important ways. First, because of the introduction of the material as monomer into the mould, high melt flow is not required. As a result, extremely high molecular weight, low melt flow materials can be produced directly in the mould. These materials can have advantages over conventional polyolefins in terms of abrasion resistance, impact strength, creep, toughness and other properties.

In addition to the possibility of forming articles of ultrahigh molecular weight polymers by this technique, the crystal structure and rate of crystallization of materials formed by this method may be substantially different from conventional reactor polymers. This can give advantages in processing time beyond the cycle time of the actual moulding process in the case of poly-1-butene and other materials that are slow to crystallize after thermal injection moulding. This change in crystallization behaviour, in the case of predominantly isotactic poly-1-butene, is consistent with the low temperatures and pressures (well below the melting point of the polymer) required to form solid poly-1-butene parts in the mould. The low temperatures of moulding are allowed by the solubility of the polymer in the 1-butene monomer. From X-ray diffraction studies it appears that Form I is the predominant crystalline form in poly-1-butene produced according to this invention.

For stereoregulating polymerization of propylene the procatalysts are preferably employed with triethyl aluminium cocatalyst, and with an aromatic ester electron donor as selectivity control agent. Preferred esters are p-methyl toluate, p-methoxy-ethyl benzoate or p-ethoxy-ethyl-benzoate.

In the stereoregulating polymerization of 1-butene the cocatalyst preferably comprises a mixture of dialkyl aluminium chloride and iodide, e.g. diethyl aluminium chloride and iodide.

Conventionally produced olefin polymers typically contain stabilizers against oxidative degradation which would occur in unstabilized polymer while it is being melted, as in an extruder, for forming in the melt. Since the process of this invention results in articles in final form or at least in a form which is not melted prior to or during use, such articles need not be stabilized to the extent customary in conventional polyolefins. However, stabilizers against oxidative degradation or against degradation caused by actinic radiation may be added with the monomer feed. Compounds are selected for this purpose which do not interfere to a significant extent with the polymerization reaction. Suitable stabilizing compounds may be selected from the following group: 2,6-bis(1-methylheptadecyl)-p-cresol, 4,4'-butylidene bis(6-t-butyl-m-cresol), 4,4'-cyclohexylidene bis(2-cyclohexyl phenol), 2,6-di-t-butyl-4-ethyl phenol, 2,2'-methylene bis(4-methyl-6-t-butyl phenol), tetrakis-[methylene-(3,5-di-t-butyl-4-hydroxyhydrocinnamate)]methane, 4,4-thiobis(6-t-butyl-m-cresol), 1,3,5-trimethyl-2,4,6-tris(3,5-di-t-butyl-4-hydroxybenzyl)benzene, tri-(mixed mono- and di-nonylphenyl)-phosphite, and di-t-butyl-p-cresol. Such materials are normally employed at levels of about 0.1% to 1% based on the polymer. Secondary heat stabilizers, such as dilaurylthiodipropionate and light absorbing antioxidants, such as 2-hydroxy-4-n-octyloxybenzophenone may also be employed.

Other non-interfering additives may also be added, such as pigments, acid acceptors, slip agents, antistatic agents and impact modifiers.

The process of this invention is also suitable for production of reinforced or filled polymers by use of conventional fillers or reinforcing components in particulate or filamentary form, e.g., short segments of fibre glass, silica, alumina, carbon black, silicates, aluminosilicates such a mica, talc, clays, vermiculite and asbestos, and calcium silicates such as wollastonite.

In conventional olefin polymerization processes, the polymer produced if the polymerization is carried out without chain transfer agent would generally have such a high molecular weight that it is not useful for commercial applications which require melting of the polymer. It is therefore conventional to employ a chain transfer agent, typically hydrogen, for molecular weight control. In the present invention it is not necessary to prevent production of polymer of very high molecular weight; it may be desired to produce them. If it is desired to control molecular weight to a lower value, known chain transfer agents may be employed which are not gases, e.g., zinc or cadmium dialkyls, suitably diethyl zinc or diethyl cadmium. Molecular weight also may be controlled to some extent by appropriate selection of catalyst components and by control of reaction temperature. Higher temperatures favour lower molecular weights.

For introducing monomer and coordination catalyst into the mould the monomer charge is divided into two portions, each of these being combined with one of the catalysts components. Then the two streams are mixed in a mixing zone which is located adjacent to the mould. Clearly, the location of this mixing zone should not be too far away from the mould in order to avoid excessive polymerization of the mixture before its entry into the mould. Mixing temperatures should be selected low enough to avoid excessive preliminary polymerization. Thus, in the case of polymerization of propylene one should preferably not employ mixing temperatures above 40°C.

However, one may also charge the monomer to the reactor as a single stream, carrying all the catalyst components, provided one employs low charging temperatures of up to 10°C.

When the formed article must be removed from the mould it is necessary to employ split moulds, i.e., moulds which can be separated into two or more component parts to permit removal of the article. Such moulds are well known.

In one mode of practising the invention the mould becomes part of the article and need not be removed. This is suitable, for example, in producing a plastic article which has a skin of metal or other suitable material. This embodiment may be employed for producing structural parts for buildings. Generally the mould defines a simple shape, such as a wall panel. The mould must contain an opening for admitting feed and preferably a separate opening for removal of air, or inert purging gas or monomer. If such a mould is not able to withstand the pressures which may occur during polymerization it is placed in a press in such a manner that all its surfaces are held firmly in place.

When charging the monomer to the mould, the monomer may be at a temperature in the range from chilled to elevated temperatures. Generally preferred are feed temperatures in the range from 10°C to 90°C.

Since the polymerization reaction is exothermic, the temperature in the mould during the course of the polymerization is usually higher than the temperature of the feed, unless a chilled mould is employed. Temperature distribution in the mould is affected by such factors as mould geometry, characteristics of the mould as a heat sink or heat supplying means, reactivity of catalyst and monomer, and the like. To some extent, the selection of suitable temperatures will have to be based on experience with a given system of mould, feed and catalyst, although one will normally not employ polymerization temperatures of less than 70°C.

In the polymerization of ethylene and propylene, conditions should preferably be selected such that the final temperature of the polymer is high enough to cause the polymer to be fused into a continuous coherent mass of polymer rather than an article consisting of cohering discrete polymer particles. This is typically within 10°C to 50°C below the melting point of the polymer. Preferred temperatures for polymerization of propylene are from 120 to 160°C. In the case of poly-1-butene and other polymers which are soluble in the corresponding monomer, essentially continuous coherent polymer mass may be produced even though the maximum temperature in the mould is much lower.

DE—A—1,127,579 is concerned with injection moulding of previously prepared thermoplastic polymer, US—A—4,311,816 is concerned with a method for preparing thermoplastic polymers by solution polymerization, US—A—4,191,717 is concerned with a process for producing thermosets by a liquid resin casting method.

The invention is further illustrated in the following examples. These are given for the purpose of illustration and are not meant to limit the invention to the particular reactants and conditions employed therein.

One mould employed in the examples, Mould A, consisted of two 2.54 cm×17.78 cm×30.48 cm 316 stainless steel plates defining a 0.32 cm×7.62 cm×20.32 cm cavity. The steel plates were held together by bolts. The cavity was sealed by a rubber o-ring joined with silicon "RTV" elastomer caulking. Feed was charged through a port entering the cavity through the top plate at its centre; the evacuation line was connected to the cavity near one of the short edges. The mould was designed to withstand 686.5 bar (700 kp/cm$^2$) of pressure. It was not fitted with heat exchange means, but represented a substantial heat sink, having a mass of 24.5 kg. For some experiments, the mould was fitted with a thermocouple at the midline of one steel plate, to monitor mould temperature; for other experiments the mould was fitted with a thermowell protruding into the centre of the mould cavity to monitor the temperature of the polymerizing mass. A second mould employed in the examples, Mould B, was a 100 ml stainless steel autoclave having an internal diameter of 4.3 cm, height of 6.7 cm, mass of 2.2 kg. Generally the contents of Mould B were stirred during the run by a magnetic stir bar at the bottom of the autoclave.

The following materials were employed in the examples:

Monomers

All monomers were commercially available materials of high purity.

Propylene and 1-butene were passed, before use, through a BTS column and a 3A molecular sieve column for removal of residual oxygen and water, respectively.

Procatalysts

The procatalyst designated Mg/Ti/EB was a solid component in which TiCl$_4$ and ethyl benzoate are present on a MgCl$_2$ support. This procatalyst had a titanium content of 3.52% wt. and was capable of producing polypropylene of 4.0% wt. xylene solubles with a yield of 392 kg per gram titanium when employed in a one hour bulk polymerization at 67°C in the presence of hydrogen with triethyl aluminium cocatalyst and paraethyl anisate selectivity control agent at mole ratios of 70:1 TEA:Ti and about 0.31:1 pEA:TEA.

Cocatalysts

TEA designates triethyl aluminium and DEAC designates aluminium chloride.

Selectivity control agent

pEA designated p.methoxy-ethylbenzoate.

Example 1 (for comparison)

This example illustrates the method in which one component of a coordination catalyst is placed in mould A. The apparatus employed utilized a single 150 cc pressure vessel as charge vessel.

The open mould was loaded in a dry box with 220 mg of catalyst TiCl$_3$ 1,1, which was smeared over the inside surface of the lower mould half with a spatula. The mould was then sealed, removed from the dry box, and connected to the feed vessel through a line and series of valves which permitted evacuation of the mould and lines. The feed vessel contained 1 ml of triethyl aluminium (TEA) dissolved in 60.1 g of purified and dried 1-butene. The lines and mould were evacuated and the butene/TEA solution was admitted to the mould.

The mould was initially at 25°C; the temperature increased to a maximum of 30°C within 5 minutes of charging the monomer to the mould, due to the polymerization exotherm.

The butene feed vessel was maintained at a temperature warmer than the mould (40—60°C) to drive the liquid butene into the mould.

The mould was opened the next morning to reveal a moulded sheet of poly-1-butene with the feel and appearance of poly-1-butene prepared from this catalyst system in a conventional 1-butene polymerization process. The part was a single piece of plastic, strong, tough, smooth and exactly reproducing the mould except for shrinkage marks on the upper face.

The mass of the part was 38 g; the mould used holds 29.5 g of monomer and would hold 44 g of perfect void-free poly-1-butene; the difference between theoretical (44 g) and observed (38 g) weight is attributable to interruption of monomer flow into the mould before all shrinkage was accommodated.

4

The moulded piece was purple in colour. This indicates that the TiCl$_3$ catalyst remained active overnight although the theoretical heat evolution had occurred within five minutes of monomer introduction.

Analysis of the vapour and solid mould contents proved that greater than 95% conversion of monomer to polymer had occurred in-mould.

Example 2 (in comparison)

The mould used in Example 1 was dried, rinsed with TEA/heptane, and fitted to a mixing zone which was connected to two monomer feedlines. The procatalyst side was charged with 196 mg of TiCl$_3$ and 62.4 g of purified 1-butene and the cocatalyst side was charged with 1 ml of 25% TEA in heptane, dissolved in 55.1 g of 1-butene. The feed lines and mixing vessel were dried and purged with nitrogen via evacuation/pressurization cycles, and assembled in the dry box. The assembly was removed from the dry box, loaded with monomer and catalyst components, and connected to the mould; the new connections were then purged via evacuation/pressurization cycling.

The mould was filled by opening mechanically ganged valves and allowing the two monomer streams to flow under nitrogen pressure, via the mixing zone, into the mould. The temperature in the mould rose rapidly to about 30°C. The same nitrogen pressure was kept throughout this polymerization experiment in order not to interrupt the monomer flow into the mould. The 1-butene was converted to a solid part with a smooth, glossy lower surface and removed from the mould. The moulded plaque lost 1.5% of its weight on standing, indicating the level of residual monomer in the plastic after polymerization. As before, the polymerization proceeded at a low temperature (25—30°C) but the part produced was solid plastic (density 0.887 g/cc) of excellent mechanical integrity and surface appearance. No shrinkage marks were apparent.

The polymer was analyzed and found to have a number average molecular weight, $\overline{M}n$, of 141,000; a weight average molecular weight, $\overline{M}w$, of 1,265,000; and a molecular weight distribution ($\overline{M}w/\overline{M}n$) of 9.0. The part contained 10.2% of atactic material extractable by diethyl ether and 89.8% of isotactic ether insoluble material.

Example 3

The mould used in Example 1 was loaded with (in vertically descending order in the monomer feed line) 0.04 ml pEA, 0.46 ml 25% TEA/heptane, and 0.03 g Mg/Ti/EB procatalyst. The mould had been purged with gaseous propylene and then liquid propylene under nitrogen pressure was used to drive the catalyst components vertically downward and into the mould. Valves were progressively opened so that pEA was mixed with TEA; that mixture mixed with Mg/Ti/EB and the whole catalyst mixture blasted into the mould with liquid monomer; the mould was sealed, and warmed to 40°C. The same nitrogen pressure was kept throughout. After 2 hours the mould was warmed to 78°C.

The mould was vented after three hours, with no residual monomer pressure observed. The mould contained a sheet of compressed and cohering granules of polypropylene of considerable integrity and strength. The propylene polymer produced had an atactic (xylene soluble) content of 1.8%, a melt flow of 0.032, a $\overline{M}w$ of about 1,300,000, and a $\overline{M}n$ of about 130,000. Conversion of monomer to polymer was 99.9%.

This run is shown as Example IV-1 of Table 1.

Example 4

Propylene was polymerized by several different methods; the results are shown in Table 1.

Examples IV-1, -2 and -3 were carried out substantially according to the procedure of Example 3. The mould was placed on a hot plate for temperature control.

Example 5

The procedure of Example 3 was substantially repeated using 1-butene monomer and different catalyst and conditions; the results are shown in Table 2.

TABLE 1
Homopolymerization of propylene

| Example | Procatalyst | Cocatalyst | SCA | Mould temp. °C | Polymer mass (g) | $M\overline{w}$ (by melt flow) | $M\overline{w}$ | $M\overline{n}$ | Atactic (xylene solubles) (%) |
|---|---|---|---|---|---|---|---|---|---|
| | | | | | | | (by GPC) | | |
| IV-1 | Ti/Mg/EB 30 mg | TEA 0.46 ml | pEA .04 ml | 23—77 | 30 | $1.6 \times 10^6$ | $1.3 \times 10^6$ | $130 \times 10^3$ | 1.8 |
| | | | | | | — | $1.1 \times 10^6$ | $110 \times 10^3$ | to |
| | | | | | | — | $1.0 \times 10^6$ | $70 \times 10^3$ | 2.9 |
| IV-2 | Ti/Mg/EB 30 mg | TEA 0.46 ml | pEA .04 ml | 60—64 | 26 | | $800 \times 10^3$ | $60 \times 10^3$ | 2.9 |
| IV-3 | Ti/Mg/EB 30 mg | TEA 0.46 ml | pEA .04 ml | 47 | 35 | | $980 \times 10^3$ | $72 \times 10^3$ | 1.8 |

EP 0 101 627 B1

# EP 0 101 627 B1

## TABLE 2
### Homopolymerization of 1-butene

| Example | Procatalyst Mg/Ti/EB (g) | Cocatalyst | ml | Mould temp. °C | (bar) | Mould pressure (psig) | Mass of plate (g) |
|---|---|---|---|---|---|---|---|
| V-1 | 0.027 | TEA | 2.4 | 25—61 | 5.11—9.18 | (60—120) | 32.6 |
| V-2 | 0.011 | TEA | 2.4 | 25—54[a] | 2.7 | (25) | 33.0 |

[a]Mould chilled to −26°C to reduce polymerization rate and then heated to 54°C after one hour and held one hour, then cooled and opened. The polymer made a solid plate in the mould.

**Claim**

A process for the polymerization of ethylene, propylene or 1-butene in the presence of procatalyst comprising a magnesium halide, a titanium halide and an electron donor and a cocatalyst comprising trialkylaluminium and optionally a selectivity control agent, characterized in that

a) the polymerization is effected in a mould, so that the polymer takes the form of the internal volume of the mould,

b) to accommodate for polymer shrinkage monomer is additionally supplied to the mould,

c) the catalyst is introduced into the mould either by

(i) mixing procatalyst with fluid monomer, mixing cocatalyst with fluid monomer, combining said monomer streams at a position adjacent to the mould and introducing catalyst containing monomer as a single feed stream into the mould, or by

(ii) supplying each of the various catalyst components to a single fluid monomer feed stream and maintaining the temperature of that single feed stream at a temperature of at most 10°C from the moment of having contacted cocatalyst with procatalyst up to the moment of introducing the feed stream into the mould.

**Patentanspruch**

Verfahren zur Polymerisation von Ethylen, Propylen oder 1-Buten in Gegenwart eines Prokatalysators, der ein Magnesiumhalogenid, ein Titanhalogenid und einen Elektronendonator umfaßt, und eines Cokatalysators, der Trialkylaluminium und wahlweise ein Selektivitätsregelungsmittel beinhaltet, dadurch gekennzeichnet, daß

(a) die Polymerisation in einer Form durchgeführt wird, sodaß das Polymer die Gestalt des Innenvolumens der Form annimmt,

(b) um den Polymerschrumpf auszugleichen, zusätzlich Monomer in die Form zugeführt wird,

(c) der Katalysator in die Form entweder durch

(i) Vermischen des Prokatalysators mit flüssigem Monomer, Vermischen des Cokatalysators mit flüssigem Monomer, Vereinigen der genannten Monomerströme an einer an die Form angrenzenden Stelle und Einbringen des katalysatorhältigen Monomers als einzelnen Feedstrom in die Form oder durch

(ii) Zuführen jeder der verschiedenen Katalysatorkomponenten zu einem einzelnen, flüssigen Monomerfeedstrom und Halten der Temperatur dieses einzelnen Feedstromes auf einer Temperatur von höchstens 10°C vom Moment des In-Kontakt-Bringens des Cokatalysators mit dem Prokatalysator bis zum Moment des Einbringens des Feedstromes in die Form eingebracht wird.

**Revendication**

Procédé pour la polymérisation de l'éthylène, du propylène ou du 1-butène en présence d'un pro-catalyseur comprenant un halogénure de magnésium, un halogénure de titane et un donneur d'électrons et d'un co-catalyseur comprenant un trialkylaluminium et éventuellement d'un agent de réglage de la sélectivité, caractérisé en ce que

a) on effectue la polymérisation dans un moule de telle sorte que le polymère prenne la forme du volume interne du moule,

b) pour tenir compte du retrait du polymère, on fournit le monomère en supplément dans le moule,

c) on introduit le catalyseur dans le moule, soit

(i) en mélangeant le pro-catalyseur avec le monomère fluide, en mélangeant le co-catalyseur avec le monomère fluide, en combinant lesdits courants de monomères dans une position voisine du moule et en

7

introduisant le monomère contenant le catalyseur sous la forme d'un courant unique d'alimentation dans le moule, soit

(ii) en fournissant chacun des différents composants catalytiques dans un courant unique d'alimentation du monomère fluide et en maintenant la température de ce courant unique d'alimentation à une température d'au plus 10°C, dès l'instant où le co-catalyseur est en contact avec le pro-catalyseur, et jusqu'à l'introduction du courant d'alimentation dans le moule.